# EUROPÄISCHE PATENTSCHRIFT

(11) **EP 2 918 173 B1**
(45) Veröffentlichungstag und Bekanntmachung des Hinweises auf die Patenterteilung: **12.12.2018**
(21) Anmeldenummer: 15157592.5
(22) Anmeldetag: 04.03.2015
(51) Int. Cl.: A21C 11/00, A21C 11/10

(54) **Ausstechvorrichtung für teigige Massen**
CUTTING OUT DEVICE FOR PASTY SUBSTANCES
DISPOSITIF DE DÉCOUPAGE POUR DES SUBSTANCES PÂTEUSES

(30) Priorität: 14.03.2014 DE 202014002237 U
(43) Veröffentlichungstag der Anmeldung: 16.09.2015
(73) Patentinhaber: Feuchtmann GmbH, 91593 Burgbernheim (DE)
(72) Erfinder: Feuchtmann, Ulrich, 91489 Wilhelmsdorf (DE)
(74) Vertreter: Rau, Schneck & Hübner Patentanwälte Rechtsanwälte PartGmbB

(56) Entgegenhaltungen:
- US-A- 176 217
- US-A- 2 246 424
- US-A- 2 314 401

## Beschreibung

Die Erfindung betrifft eine Ausstechvorrichtung für teigige Massen wie beispielsweise Knete oder Backteig.

Die DE 74 31 481 U1 offenbart eine Vorrichtung zum Ausstechen von Formhäppchen aus Nahrungsmittelscheiben. Die Ausstechvorrichtung umfasst eine Ausstechform, an der ein Schaft mit einem daran angeschraubten Teller verlagerbar angeordnet ist. Der Teller ist mittels einer Durchsteck-Schraube an dem Schaft lösbar befestigt. Es ist nachteilig, dass eine der Nahrungsmittelscheibe zugewandte Unterseite des Tellers durch die Schraube unterbrochen ist. Damit hergestellte Formhäppchen aus Nahrungsmittelscheiben weisen eine beeinträchtigte Erscheinungsform auf. Insbesondere kommt die Schraube mit dem Nahrungsmittel in Kontakt.

Weitere Ausstechvorrichtungen sind bekannt aus der US 2,314,401, der US 2,246,424 und der US 176,217.

Es ist die Aufgabe der vorliegenden Erfindung, eine Ausstechvorrichtung für teigige Massen derart zu verbessern, dass Ausstechmotive mit einer unbeeinträchtigten Oberfläche ausgestochen und/oder ausgeworfen werden können, wobei die Ausstechvorrichtung unkompliziert aufgebaut ist.

Diese Aufgabe ist durch die Ausstechvorrichtung mit den im Anspruch 1 angegebenen Merkmalen gelöst. Erfindungsgemäß wurde erkannt, dass eine Auswerfereinheit eine Auswerferplatte mit einer ununterbrochenen, der teigigen Masse zugewandten Vorderseite aufweist. Mit der ununterbrochenen Vorderseite der Auswerferplatte ist es möglich, dass die Auswerferplatte nicht nur eine Auswerferfunktion, sondern darüber hinaus eine bildgebende Funktion für die teigige Masse übernehmen kann. Insbesondere kann eine an der Vorderseite der Auswerferplatte vorgesehene Struktur der teigigen Masse eingeprägt werden. Ein Ausstechmotiv einer teigigen Masse wird durch die ununterbrochene Vorderseite der Auswerferplatte nicht negativ beeinträchtigt. Dadurch, dass die Vorderseite ununterbrochen ausgeführt ist, wird die bildgebende Funktion der Auswerferplatte nicht beeinträchtigt. Insbesondere ist ein Abbild eines Schraubenkopfes in der teigigen Masse, wie es gemäß DE 74 31 489 U1 nicht zu verhindern ist, nicht gegeben. Um die ununterbrochene Vorderseite zu ermöglichen, ist die Auswerferplatte an einer der Vorderseite abgewandten Rückseite mit einer Auswerferstange verbunden. Die Auswerferstange ist an der Auswerferplatte befestigt. Die Auswerferstange dient zum Verlagern der Auswerferplatte relativ zu einer Ausstechform. Ferner ist ein Federelement vorgesehen, um die Auswerferplatte mit einer Federkraft zu beaufschlagen. Das Federelement ist insbesondere als Druckschraubenfeder ausgeführt. Die Federkraft ist insbesondere derart orientiert, dass die Auswerferplatte in einem unbetätigten Zustand innerhalb der Ausstechform und insbesondere an einer Oberseite der Ausstechform angeordnet ist. Die Ausstechform ist insbesondere im Wesentlichen becherförmig ausgeführt. Die Ausstechform weist einen Innenraum zum Aufnehmen der teigigen Masse auf. Die Ausstechform weist einen, insbesondere unteren, Ausstechrand auf. Der Ausstechrand gibt eine Ausstechkontur vor. Die Auswerferplatte ist unmittelbar mit der Auswerferstange verbunden. Zusätzliche Befestigungsmittel sind nicht erforderlich. Der Aufbau der Auswerfereinheit ist vereinfacht.

Die Ausstechvorrichtung ist derart ausgeführt, dass die Auswerferplatte lösbar mit der Auslöserstange verbunden ist. Dadurch ist gewährleistet, dass die Auswerferplatte und die Auswerferstange, insbesondere beliebig oft, voneinander getrennt und wieder miteinander verbunden werden können. Dadurch ist die Reinigung der Ausstechvorrichtung vereinfacht. Insbesondere ist gewährleistet, dass eine sichere Verbindung von Auswerferplatte und Auswerferstange auch nach mehrfachem Lösen und Wiederverbinden von Auswerferplatte und Auswerferstange gewährleistet ist. Insbesondere sind bei einer derartigen Ausstechvorrichtung die Ausstechform und die Auswerferplatte aus einem Material hergestellt, das spülmaschinengeeignet ist. Dies gilt insbesondere für Kunststoffmaterialien, die wasserabweisend sind. Die Kunststoffmaterialien sind temperaturbeständig bis etwa 35°C. Eine benutzte Ausstechvorrichtung kann in einer Spülmaschine mit einem Spülprogramm, bei dem etwa 35°C Wassertemperatur angewendet werden, vollständig gereinigt werden. Die verwendeten Kunststoffmaterialien für die Ausstechvorrichtung sind insbesondere thermoplastische Kunststoffe, insbesondere Acrylnitril-Butadien-Styrol (ABS) oder Polyethylen (PE).

Vorteilhaft ist es, dass an der Auswerferplatte eine Gewindebuchse befestigt ist, in die die Auswerferstange einschraubbar ist. Dazu weist die Auswerferstange einen Gewindeabschnitt auf, der insbesondere als metrisches Gewinde ausgeführt ist. Dadurch ist eine robuste, unkomplizierte Verbindung zwischen Auswerferplatte und Gewindebuchse geschaffen. Insbesondere ist die Gewindebuchse aus Metall hergestellt.

Vorteilhaft ist eine Ausstechvorrichtung mit einem an der Auswerferstange befestigten Betätigungsgriff. Die Handhabung der Ausstechvorrichtung, insbesondere das Ausstechen und insbesondere das anschließende Auswerfen der teigigen Masse, sind dadurch vereinfacht.

Vorteilhaft ist eine Ausstechvorrichtung mit einer Führungshülse zum geführten Verlagern der Auswerferstange. Ein Verkippen und/oder Verkanten der Auswerferstange gegenüber der Ausstechvorrichtung ist im Wesentlichen nicht mehr möglich. Die manuelle Handhabung der Ausstechvorrichtung ist fehlerunanfällig und insbesondere für Kinder geeignet.

Besonders vorteilhaft ist eine Ausstechvorrichtung, bei der die Führungshülse an einer dem Innenraum abgewandten Außenseite der Ausstechform angeordnet ist. Dadurch ist gewährleistet, dass die Baugröße der Ausstechvorrichtung insgesamt reduziert ist. Insbesondere ist es nicht erforderlich, einen von der Ausstechform umgebenen Innenraum zu vergrößern, um die Führungshülse innenliegend auszuführen. Insbesondere ist die Führungshülse einteilig an der Ausstechform angeformt. Die Herstellung der Ausstechform ist vereinfacht. Die Ausstechform kann einteilig, insbesondere in einem Prozessschritt durch Kunststoff-Spritzguss hergestellt werden. Dadurch, dass die Führungshülse an der Außenseite angeformt ist, ist ein Hinterschnitt nicht erforderlich.

Vorteilhaft ist eine Ausstechvorrichtung, bei der die Auswerferplatte eine strukturierte Vorderseite aufweist. Insbesondere können an der Vorderseite der Auswerferplatte verschieden geformte Vertiefungen und/oder Erhebungen vorgesehen sein, um ein gewünschtes Motiv darzustellen. Die vorgesehenen Strukturen können linien- und/oder flächenhaft ausgeführt sein. Dadurch ist die bildgebende Funktion der Auswerferplatte besonders unkompliziert integriert.

Vorteilhaft ist eine Ausstechvorrichtung mit mehreren, insbesondere drei, an einer der Ausstechform zugewandten Rückseite der Auswerferplatte angeordneten Abstandshalter. Die Abstandshalter garantieren, dass bei einem Betätigen der Ausstechform die Auswerferplatte in einer definierten Lageposition zu dem Ausstechrand angeordnet bleibt. Insbesondere ist die Auswerferplatte parallel zu dem Ausstechrand angeordnet. Dazu weisen die Abstandshalter jeweils eine identische Höhe auf.

Vorteilhaft ist eine Ausstechvorrichtung, bei der die Ausstechform und/oder die Auswerferplatte aus Kunststoff hergestellt sind. Eine derartige Ausstechvorrichtung ist kostengünstig herstellbar und weist ein reduziertes Gewicht auf. Eine derartige Ausstechvorrichtung ist insbesondere für die Anwendung im Spielwarenbereich vorteilhaft.

Vorteilhaft ist eine Ausstechvorrichtung, bei der die Auswerferstange aus Metall, insbesondere aus rostfreiem Metall, hergestellt ist. Eine derartige Ausstechvorrichtung ist robust ausgeführt. Auch eine Fehlanwendung durch eventuell ungeschickte manuelle Handhabung der Ausstechvorrichtung, wie sie bei Kindern vorkommen kann, führt nicht unmittelbar zu einer Beschädigung oder Zerstörung der Ausstechvorrichtung.

Bei einer Ausstechvorrichtung kann die Auswerferplatte unlösbar mit der Auswerferstange verbunden sein. Unlösbar bedeutet, dass ein Lösen der Verbindung zwischen Auswerferplatte und Auswerferstange nicht vorgesehen ist. Ein Lösen der Verbindung zwischen Auswerferplatte und Auswerferstange ist aber in dieser vorteilhaften Ausgestaltung dennoch möglich. Jedoch kann ein häufiges Lösen und Wiederherstellen der Verbindung dazu führen, dass die Haltekraft zwischen Auswerferplatte und Auswerferstange reduziert ist. Unlösbar bedeutet aber nicht zwangsläufig, dass ein Lösen der Verbindung ausgeschlossen ist. Beispielsweise ist es denkbar, dass die Auswerferstange in eine dafür vorgesehen Sackbohrung der Auswerferplatte gesteckt ist. Um eine ausreichende Haltekraft der Auswerferstange an der Auswerferplatte zu gewährleisten, kann eine geeignete Presspassung zwischen einem Außendurchmesser der Auswerferstange und einem Innendurchmesser der Sackbohrung der Auswerferplatte vorgesehen sein. Zusätzlich oder alternativ kann an einem unteren, der Auswerferplatte zugewandten Ende der Auswerferstange ein selbstschneidendes Gewinde vorgesehen sein, mit dem die Auswerferstange in die Auswerferplatte eingedreht ist. Eine derartige Verbindung von Auswerferplatte und Auswerferstange ist kostengünstig herstellbar.

Besonders vorteilhaft ist eine Ausstechvorrichtung mit einer an der Auswerferplatte befestigten Gewindebuchsenaufnahme. Die Gewindebuchsenaufnahme garantiert eine sichere Befestigung der Gewindebuchse an der Auswerferplatte. Die Gewindebuchsenaufnahme ist insbesondere einteilig an einer Rückseite der Auswerferplatte angeformt.

Ein Ausführungsbeispiel der Erfindung wird nachfolgend anhand der Zeichnung näher erläutert. Es zeigen:
- Fig. 1: eine Explosionsdarstellung einer nicht erfindungsgemäßen Ausstechvorrichtung, bei der die Auswerferplatte und Auswerferstange unlösbar miteinander verbunden sind, und
- Fig. 2: eine Fig. 1 entsprechende Darstellung einer erfindungsgemäßen Ausstechvorrichtung, bei der die Auswerferplatte und die Auswerferstange lösbar miteinander verbunden sind.

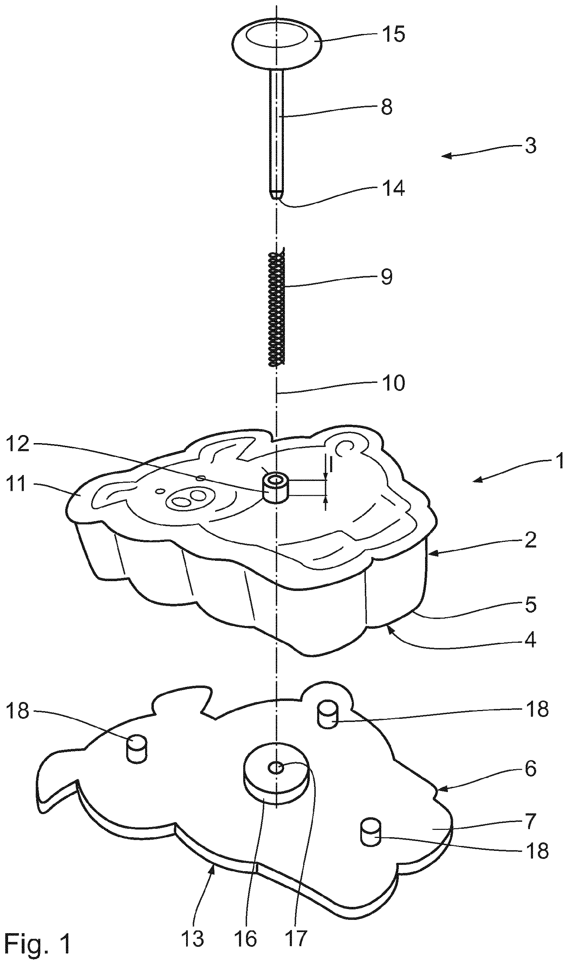

Eine in Fig. 1 als Ganzes mit 1 dargestellte Ausstechvorrichtung ist ein Spielzeug und dient zum Ausstechen von Knetmasse. Grundsätzlich ist die gezeigte Ausstechvorrichtung geeignet, beliebige teigige Massen auszustechen. Insbesondere ist die Ausstechvorrichtung 1 auch geeignet, um Backteig auszustechen.

Die Ausstechvorrichtung 1 umfasst eine Ausstechform 2 und eine Auswerfereinheit 3. Die Ausstechform 2 ist als Schweinchen-Motiv ausgeführt.

Grundsätzlich sind beliebige Ausstechmotive möglich. Beispielsweise können Ausstechmotive an Bedürfnisse von Kindern angepasst sein und themenbezogen sein wie beispielsweise verschiedene Tiermotive oder Spielwaren wie Bälle und Kegel. Die Ausstechmotive können auch saisonal bezogen sein wie beispielsweise zu Oster- oder Weihnachtsmotive. Die Ausstechmotive können Fanartikel für prominente Personen, Sportvereine, insbesondere Fußballvereine, abdecken. Ausstechmotive können auch Automobile, insbesondere bekannte Automobilhersteller, sein. Die Funktion der Ausstechvorrichtung ist von der Gestaltung des Motivs der Ausstechform im Wesentlichen unabhängig.

Die Ausstechform 2 umgibt einen Innenraum 4 zum Aufnehmen einer teigigen Masse. Die Ausstechform 2 weist einen unteren Ausstechrand 5 auf. Der Ausstechrand 5 gibt die Ausstechkontur der Ausstechform 2 vor. Der Ausstechrand 5 umgibt eine Einfüllöffnung zum Einfüllen der teigigen Masse in den Innenraum 4. Der Ausstechrand 5 weist eine reduzierte Dicke auf, die höchstens 1 mm, insbesondere 0,5 mm und insbesondere höchstens 0,2 mm aufweist.

Die Ausstechform 2 ist einteilig aus Kunststoff hergestellt. An einer dem Innenraum 4 abgewandten Außenseite 11 ist an der Ausstechform 2 eine Führungshülse 12 einteilig angeformt. Die Außenseite 11 der Ausstechform 2 weist eine Struktur auf, die der Bildgebung einer ausgestochenen Teigmasse entspricht. Gemäß dem gezeigten Ausführungsbeispiel ist die Führungshülse 12 eine Ringhülse, weist also eine ringflächenförmige Querschnittsfläche auf. Die Führungshülse 12 weist eine senkrecht zur Außenseite 11 orientierte Führungslänge 1 auf, die gemäß dem gezeigten Ausführungsbeispiel 3 mm beträgt. Ein Innendurchmesser der Führungshülse 12 beträgt gemäß dem gezeigten Ausführungsbeispiel 2 mm. Wesentlich ist, dass der Innendurchmesser einerseits groß genug ist, dass die Auswerferstange 8 durch die Führungshülse 12 hindurch geführt werden kann. Andererseits ist der Innendurchmesser der Führungshülse 12 klein genug, um ein unbeabsichtigtes Verkanten oder Schrägstellen der Auswerferstange 8 gegenüber der Außenseite 11 zu verhindern. Insbesondere beträgt der Innendurchmesser der Führungshülse 12 zwischen 101% und 120% des Außendurchmessers der Auswerferstange 8, insbesondere zwischen 102% und 110% des Außendurchmessers der Auswerferstange 8, insbesondere zwischen 103% und 108% des Außendurchmessers der Auswerferstange 8 und insbesondere etwa 105% des Außendurchmessers der Auswerferstange 8.

Die Führungshülse 12 weist eine Wandstärke von 1,5 mm auf. Die Wandstärke ist ausreichend, um eine erforderliche Stabilität der Führungshülse 12 zu gewährleisten. Insbesondere ist die Gefahr, dass die Führungshülse 12 in Folge einer nicht fachgerechten manuellen Handhabung, die insbesondere durch Kindeshand auftreten kann, bricht, reduziert.

Die Auswerfereinheit 3 umfasst eine Auswerferplatte 6, eine an einer Rückseite 7 der Auswerferplatte 6 befestigte Auswerferstange 8 und ein Federelement 9 für ein Beaufschlagen der Auswerferplatte 6 mit einer Federkraft. Das Federelement 9 ist eine Druckschraubenfeder. Das Federelement 9 weist eine Federlänge entlang der Verlagerungsachse 10 derart auf, das im unbetätigten Zustand der Ausstechvorrichtung, also bei entspanntem Federelement 9, die Auswerferplatte 6 innerhalb des Innenraums 4 in der Ausstechform 2 angeordnet ist. Die Auswerferplatte 6 weist eine äußere Kontur auf, die geometrisch ähnlich zu dem Ausstechrand 5 der Ausstechform 2 ist. Die Auswerferplatte 6 ist relativ zu der Ausstechform 2 und insbesondere senkrecht zu dem Ausstechrand 5 entlang einer Verlagerungsachse 10 verlagerbar. Zwischen einer äußeren Kontur der Auswerferplatte 6 und einer Seitenwand der Ausstechform 2 kann ein umlaufender Spalt vorgesehen sein, der ein Verlagern der Auswerferplatte 6 entlang der Verlagerungsachse 10 vereinfacht. Ein derartiger umlaufender Spalt weist insbesondere ein Spaltmaß von höchstens 0,5 mm, insbesondere höchstens 0,2 mm auf.

An einer der Rückseite 7 abgewandten, nicht sichtbaren Vorderseite 13 der Auswerferplatte 6 ist eine Struktur vorgesehen. Die Struktur entspricht im Wesentlichen der Bilddarstellung auf der Außenseite 11 der Ausstechform 2. Gemäß dem gezeigten Ausführungsbeispiel umfasst die Struktur verschiedene Linien- und Flächenelemente, die durch Erhebungen und/oder Vertiefungen ausgeführt sind. Die Struktur stellt ein stilisiertes Schweinchen dar. Die Struktur an der Vorderseite 13 der Auswerferplatte 6 ermöglicht eine verbesserte Gestaltung einer Knetfigur. Mittels der Ausstechform 2 kann man eine teigige Masse entlang des Ausstechrands 5 ausschneiden. Mittels der Auswerferplatte 6 kann eine durch das Ausstechen nicht beeinflussbare Oberseite der teigigen Masse geformt bzw. geprägt werden. Das Ausstechergebnis ist im Wesentlichen dreidimensional und dadurch verbessert.

Die Auswerferstange 8 weist ein unteres, der Auswerferplatte 6 zugewandtes konisches Verbindungsende 14 auf. Die Auswerferstange 8 ist aus Metall, insbesondere aus rostfreiem Metall, hergestellt. Das konische Verbindungsende 14 ist konisch verjüngend ausgeführt. An einem dem konischen Verbindungsende 14 gegenüberliegenden Ende ist ein Betätigungsgriff 15 an der Auswerferstange 8 angeformt. Der Betätigungsgriff 15 ist insbesondere aus Kunststoff hergestellt. Der Betätigungsgriff 15 erleichtert die Handhabung der Auswerferstange 8 und damit der Auswerfereinheit 3. An der Rückseite 7 der Auswerferplatte 6 ist ein Befestigungselement 16 vorgesehen, in dem eine Aufnahmeöffnung 17 angeordnet ist. Das Befestigungselement 16 ist als Scheibe ausgeführt. Die Aufnahmeöffnung 17 ist als Sackbohrung in dem Befestigungselement 16 vorgesehen. Das Befestigungselement 16 ist insbesondere einstückig an der Rückseite 7 der Auswerferplatte 6 angeformt. Die Auswerferstange 8 ist mit dem konischen Verbindungsende 14 in die Aufnahmeöffnung 17 des Befestigungselements 16 eingesteckt. Dadurch ist die Auswerferstange 8 mit der Auswerferplatte 6 unlösbar im Sinne der vorliegenden Erfindung verbunden. Es ist klar, dass eine derartige Verbindung gewaltsam getrennt werden kann. Die Verbindung ist aber insbesondere unlösbar während der Lebensdauer der Ausstechvorrichtung in Verwendung als Spielzeug für Kinder.

Eine alternative, nicht dargestellte unlösbare Verbindung ist beispielsweise dadurch geschaffen, dass zusätzlich oder alternativ zu dem konischen Verbindungsende 14 ein selbstschneidendes Gewinde an dem unteren Ende der Auswerferstange 8 vorgesehen ist. Mittels dem selbstschneidenden Außengewinde kann die Auswerferstange 8 in das Betätigungselement 16 eingeschraubt werden. In diesem Fall ist es nicht zwingend erforderlich, dass eine Aufnahmeöffnung 17 vorgesehen ist. Die Aufnahmeöffnung 17 kann aber vorgesehen sein, um das Einschrauben der Auswerferstange 8 mit dem selbstschneidenden Gewinde zu vereinfachen.

An der Rückseite 7 der Auswerferplatte 8 sind drei Abstandshalter 18 vorgesehen. Die Abstandshalter 18 weisen entlang der Verlagerungsachse 10 eine jeweils identische Höhe auf. Dadurch ist gewährleistet, dass während des Ausstechens, wenn die Auswerferplatte mit der Rückseite 7 nach oben, zu der Außenseite 11 der Ausstechform 2 verlagert wird, die Auswerferplatte 6 definiert und insbesondere nicht gegenüber der Auswerferstange 8 verkippt angeordnet ist. Dadurch ist gewährleistet, dass die Struktur an der Vorderseite 13 der Auswerferplatte 6 gleichmäßig auf die teigige Masse abgebildet wird. Insbesondere ist die jeweilige Höhe der Abstandshalter 18 größer als eine Höhe des Befestigungselements 16 entlang der Verlagerungsachse 10.

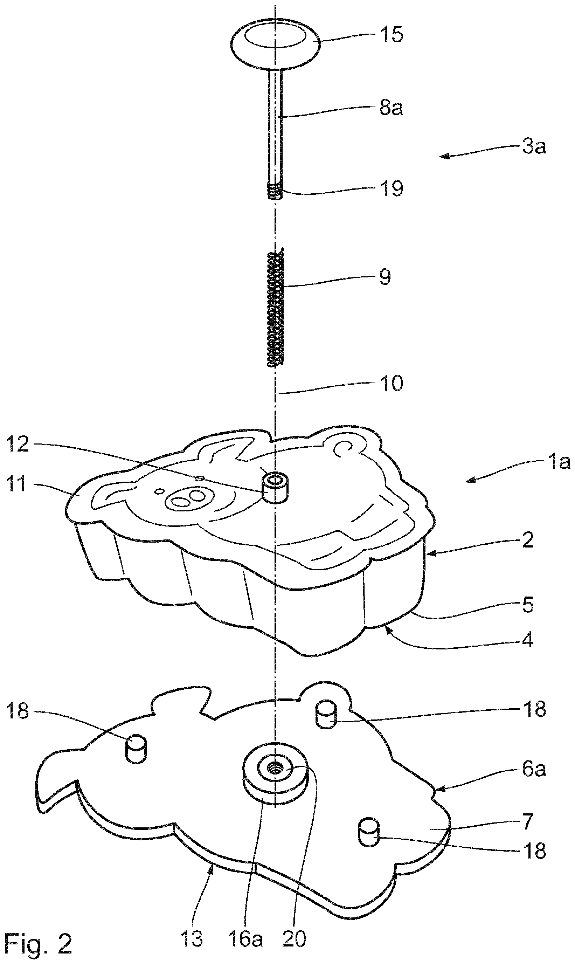

Nachfolgend wird anhand von Fig. 2 ein Ausführungsbeispiel der vorliegenden Erfindung erläutert. Konstruktiv identische Komponenten tragen dieselben Bezugsziffern, wie vorstehend anhand Fig. 1 erläutert. Konstruktiv gleichartige, jedoch funktionell unterschiedliche Komponenten tragen dieselben Bezugsziffern mit einem nachgestellten a.

Wesentlicher Unterschied der Ausstechvorrichtung 1a ist die lösbare Verbindung zwischen Auswerferstange 8a und Auswerferplatte 6a. Die Auswerferstange 8a weist an einem unteren Ende ein Außengewinde 19 auf. An der Rückseite 7 der Auswerferplatte 6a ist als Befestigungselement 16a eine Gewindebuchsenaufnahme vorgesehen. Die Gewindebuchsenaufnahme ist einteilig an der Rückseite 7 der Auswerferplatte 6a angeformt. Gemäß dem gezeigten Ausführungsbeispiel ist die Gewindebuchsenaufnahme ringscheibenförmig ausgeführt mit einem Außendurchmesser von 10 mm und einem Innendurchmesser von 5 mm. In die Gewindebuchsenaufnahme ist eine ringförmige Gewindebuchse 20 aus Metall eingesetzt. Es ist möglich, die Außenkontur der Gewindebuchse 20 bezogen auf die Verlagerungsachse 10 unrund, beispielsweise quadratisch, auszuführen, um ein Verdrehen der Gewindebuchse 20 in der Gewindebuchsenaufnahme um die Verlagerungsachse 10 zu vermeiden. Die Gewindebuchse 20 ist fest und unlösbar mit der Gewindebuchsenaufnahme verbunden. Die Gewindebuchse 20 weist ein Innengewinde auf, das mit dem Außengewinde 19 der Auswerferstange 8a korrespondiert. Dadurch ist es möglich, die Auswerferstange 8a direkt, also unmittelbar, mit der Auswerferplatte 6a zu verschrauben. Insbesondere erfolgt die Verbindung der Auswerferstange 8a mit der Auswerferplatte 6a an der Rückseite 7. Dadurch ist die Vorderseite 13 der Auswerferplatte 6a ununterbrochen ausgeführt. Gleichzeitig ist eine beliebige Demontage, insbesondere eine beliebig oft wiederholbare, Demontage der Auswerfereinheit 3a durch die Schraubverbindung von Auswerferplatte 6a und Auswerferstange 8a ermöglicht.

Die Gewindebuchse weist einen Außendurchmesser derart auf, dass eine sichere Halterung der Gewindebuchse 20 in dem Befestigungselement 16a gewährleistet ist. Es ist auch denkbar, die Gewindebuchse 20 während eines Herstellverfahrens der Auswerferplatte 6a zu umspritzen, so dass die Gewindebuchse 20 durch Formschluss an dem Befestigungselement 16a gehalten ist. Dazu kann ein Hinterschnitt entlang der Verlagerungsachse 10 vorgesehen sein. Alternativ ist es auch denkbar, das Befestigungselement als Einschubschacht derart auszuführen, dass ein Einschieben der Gewindebuchse in das Befestigungselement 16 in einer Richtung parallel zur Rückseite 7 und insbesondere senkrecht zur Verlagerungsachse 10 möglicht ist. Dadurch ist eine Montage der Gewindebuchse 20 in das Befestigungselement 16a vereinfacht. Gleichzeitig ist die Gewindebuchse 20 durch Formschluss zuverlässig an dem Befestigungselement 16a gehalten. Der Einschubschacht kann ein insbesondere einstückig angeformtes Anschlagelement aufweisen, beispielsweise einen Begrenzungsteg, der die Einschubposition der Gewindebuchse 20 in das Befestigungselement 16 festlegt. Dadurch ist ein unbeabsichtigtes Verschieben der Gewindebuchse ausgeschlossen.

Die Gewindebuchse 20 kann auch aus Kunststoff hergestellt sein. Die Gewindebuchse kann ein Außengewinde aufweisen, mit dem es mit einem korrespondierenden Innengewinde in die Gewindebuchsenaufnahme einschraubbar ist. In diesem Fall kann die Gewindebuchse ausgetauscht werden.

Die Ausstechvorrichtung 1a ist insbesondere aus Materialien hergestellt, die lebensmittelecht sind. Die Materialien, aus welchen die Ausstechvorrichtung 1a hergestellt ist, sind spülmaschinengeeignet. Die Ausstechvorrichtung 1a kann unkompliziert durch Lösen der Schraubverbindung zwischen Auswerferstange 8a und Gewindebuchse 20 demontiert werden. In dem gelösten Zustand können die Einzelteile der Ausstechvorrichtung 1a vorteilhaft gereinigt und anschließend getrocknet werden. Die Handhabung, insbesondere die wiederholte Reinigung der Ausstechvorrichtung ist vereinfacht. Insbesondere ist ein beliebiges Demontieren und Montieren der Ausstechvorrichtung möglich. Ein wiederholtes Auf- und Zuschrauben der Schraubverbindung zwischen Außengewinde 19 der Auswerferstange 8a und Innengewinde der Gewindebuchse 20 ist beliebig oft möglich.

## Patentansprüche

1. Ausstechvorrichtung für teigige Massen, wobei die Ausstechvorrichtung (1a) umfasst
a. eine Ausstechform (2) mit
i. einem Innenraum (4) zum Aufnehmen der teigigen Masse,
ii. einem Ausstechrand (5),
b. eine Auswerfereinheit (3a) zum Auswerfen der teigigen Masse aus dem Innenraum (4) mit,
i. einer relativ zur Ausstechform (2) verlagerbaren Auswerferplatte (6a),
ii. einer an einer Rückseite (7) der Auswerferplatte (6a) befestigten Auswerferstange (8a) zum Verlagern der Auswerferplatte (6a),
iii. einem Federelement (9) für ein Beaufschlagen der Auswerferplatte (6a) mit einer Federkraft,
wobei die Auswerferplatte (6a) lösbar mit der Auswerferstange (8a) verbunden ist,
**dadurch gekennzeichnet, dass**
an der Auswerferplatte (6a) eine Gewindebuchse (20) befestigt ist, in die die Auswerferstange (8a) mit einem Gewindeabschnitt (19) einschraubbar ist.

2. Ausstechvorrichtung nach Anspruch 1, **gekennzeichnet durch** einen an der Auswerferstange (8a) befestigten Betätigungsgriff (15) zum Betätigen der Auswerfereinheit (3a).

3. Ausstechvorrichtung nach einem der vorstehenden Ansprüche, **gekennzeichnet durch** eine Führungshülse (12) zum geführten Verlagern der Auswerferstange (8a).

4. Ausstechvorrichtung nach Anspruch 3, **dadurch gekennzeichnet, dass** die Führungshülse (12) an einer dem Innenraum (4) abgewandten Außenseite (11) der Ausstechform (2) angeordnet ist.

5. Ausstechvorrichtung nach einem der vorstehenden Ansprüche, **dadurch gekennzeichnet, dass** die Auswerferplatte (6a) eine strukturierte Vorderseite (13) aufweist.

6. Ausstechvorrichtung nach einem der vorstehenden Ansprüche, **gekennzeichnet durch** mindestens einen, insbesondere mehrere und insbesondere mindestens drei, an der Rückseite (7) der Auswerferplatte (6a) angeordneten Abstandshalter (18).

7. Ausstechvorrichtung nach einem der vorstehenden Ansprüche, **dadurch gekennzeichnet, dass** die Ausstechform (2) und/oder die Auswerferplatte (6a) aus Kunststoff hergestellt sind.

8. Ausstechvorrichtung nach einem der vorstehenden Ansprüche, **dadurch gekennzeichnet, dass** die Auswerferstange (8a) aus Metall, insbesondere rostfreiem Metall, hergestellt ist.

9. Ausstechvorrichtung nach einem der vorstehenden Ansprüche, **gekennzeichnet durch** eine an der Auswerferplatte (8a) befestigte Gewindebuchsenaufnahme (16), die insbesondere einteilig an der Rückseite (7) der Auswerferplatte (8a) angeformt ist.

## Claims

1. Cutout device for pasty substances, wherein the cutout device (1a) comprises
a. cutter (2) with
i. an inner space (4) for receiving the pasty substance,
ii. a cutting edge (5),
b. an ejector unit (3a) for ejecting the pasty substance from the inner space (4) with
i. an ejector plate (6a), which is displaceable relative to the cutter (2),
ii. an ejector rod (8a) fixed to a rear side (7) of the ejector plate (6a) for displacing the ejector plate (6a),
iii. a spring member (9) for applying a spring force to the ejector plate (6a),
wherein the ejector plate (6a) is detachably connected to the ejector rod (8a),
**characterized in that**
a threaded bushing (20) is fixed to the ejector plate (6a) for a threaded portion (19) of the ejector rod (8a) to be screwed therein.

2. Cutout device as claimed in claim 1, **characterized by** an actuating handle (15) fixed to the ejector rod (8a) for actuating the ejector unit (3a).

3. Cutout device as claimed in any one of the preceding claims, **characterized by** a guide sleeve (12) for a guided displacement of the ejector rod (8a).

4. Cutout device as claimed in claim 3, **characterized in that** the guide sleeve (12) is arranged on an outer side (11) of the cutter (2) facing away from the inner space (4).

5. Cutout device as claimed in any one of the preceding claims, **characterized in that** the ejector plate (6a) has a structured front side (13).

6. Cutout device as claimed in any one of the preceding claims, **characterized by** at least one, in particular a plurality of and in particular at least three spacers (18) arranged on the rear side (7) of the ejector plate (6a).

7. Cutout device as claimed in any one of the preceding claims, **characterized in that** the cutter (2) and/or the ejector plate (6a) are made of plastic material.

8. Cutout device as claimed in any one of the preceding claims, **characterized in that** the ejector rod (8a) is made of metal, in particular of stainless metal.

9. Cutout device as claimed in any one of the preceding claims, **characterized by** a threaded bushing receptacle (16) fixed to the ejector plate (8a), the threaded bushing receptacle (16) in particular being formed in one piece with the rear side (7) of the ejector plate (8a).

## Revendications

1. Dispositif de découpe pour des masses de pâte, le dispositif de découpe (1a) comprenant
a. un emporte-pièce (2) comportant
i. un espace intérieur (4) pour recevoir la masse de pâte,
ii. un bord de découpe (5),
b. une unité d'éjection (3a) pour éjecter la masse de pâte hors de l'espace intérieur (4) comportant
i. une plaque d'éjection (6a) déplaçable par rapport à l'emporte-pièce (2),
ii. une tige d'éjection (8a) fixée sur l'envers (7) de la plaque d'éjection (6a) afin de déplacer la plaque d'éjection (6a),
iii. un élément de ressort (9) pour appliquer une force de ressort à la plaque d'éjection (6a),
la plaque d'éjection (6a) étant reliée de manière détachable à la tige d'éjection (8a), **caractérisé en ce que**
une douille filetée (20) est fixée sur la plaque d'éjection (6a), dans laquelle la tige d'éjection (8a) comportant une section filetée (19) peut être vissée.

2. Dispositif de découpe selon la revendication 1, **caractérisé par** une poignée d'activation (15), fixée sur la tige d'éjection (8a), servant à activer l'unité d'éjection (3a).

3. Dispositif de découpe selon l'une des revendications précédentes, **caractérisé par** une douille de guidage (12) pour le déplacement guidé de la tige d'éjection (8a).

4. Dispositif de découpe selon la revendication 3, **caractérisé en ce que** la douille de guidage (12) est agencée sur une face extérieure (11) de l'emporte-pièce (2) opposée à l'espace intérieur (4).

5. Dispositif de découpe selon l'une des revendications précédentes, **caractérisé en ce que** la plaque d'éjection (6a) présente une face avant (13) structurée.

6. Dispositif de découpe selon l'une des revendications précédentes, **caractérisé par** au moins un, en particulier plusieurs et en particulier au moins trois espaceurs (18) agencés sur l'envers (7) de la plaque d'éjection (6a).

7. Dispositif de découpe selon l'une des revendications précédentes, **caractérisé en ce que** l'emporte-pièce (2) et/ou la plaque d'éjection (6a) sont fabriqués à partir de matière plastique.

8. Dispositif de découpe selon l'une des revendications précédentes, **caractérisé en ce que** la tige d'éjection (8a) est fabriquée à partir de métal, en particulier à partir de métal inoxydable.

9. Dispositif de découpe selon l'une des revendications précédentes, **caractérisé par** un logement de douille filetée (16) fixé sur la plaque d'éjection (8a) et qui est en particulier formé d'une seule pièce sur l'envers (7) de la plaque d'éjection (8a).
